# EUROPEAN PATENT SPECIFICATION

(11) **EP 2 317 866 B1**
(45) Date of publication and mention of the grant of the patent: **08.08.2012**
(21) Application number: 08790040.3
(22) Date of filing: 04.07.2008
(51) Int. Cl.: A23G 3/20, A23G 3/00, A23G 9/28

(54) **METHOD AND DEVICE FOR PRODUCING CONFECTIONERY**
VERFAHREN UND GERÄT FÜR DIE HERSTELLUNG VON KONFEKTWAREN
PROCÉDÉ ET DISPOSITIF POUR PRODUIRE DES CONFISERIES

(43) Date of publication of application: 11.05.2011
(73) Proprietor: Messori Cioccolateria S.r.l., 41058 Vignola Modena (IT)
(72) Inventor: MESSORI, Massimo, 41058 Vignola Modena (IT)
(74) Representative: Gotra, Stefano
(86) International application number: PCT/IT2008/000451
(87) International publication number: WO 2010/001424

(56) References cited:
- EP-A- 0 628 255
- US-A- 2 366 941
- US-A- 3 025 983
- US-A- 3 070 933
- US-A- 3 092 944
- US-A- 3 478 702
- US-A- 4 942 910
- US-A1- 2002 022 073
- US-B1- 6 235 329

## Description

### Technical Field

The invention relates to a method and a machine for production of sweet confectionery foods in general and in particular those destined to be arranged, immediately following the production process, in a predetermined orientation. In more detail, the sweet products the present invention makes particular reference to are an external cone-shaped wafer containing a sweet product, especially a cream or the like.

### Background Art

Confectionery products of the above type, i.e. comprising an external wafer in the form of a cone containing a sweet product, are commonly constituted by packaged ice-cream cones.

Machines are known for the production of ice cream cones comprising a carousel and a plurality of work stations arranged about the rotation axis of the carousel for realising successive work stages of the confectionery product, which is held up by the rotating carousel by means of special support seatings. When they arrive in an unloading station, the cones are expelled from the support seatings and placed, in any order, on a conveyor belt which takes them to a following packaging unit.

Owing to the conical shape thereof, the cones are laid on the conveyor practically horizontally and entirely haphazardly, and can actually move as the cones might roll on the conveyor surface, so that the cones might change position during transport.

Producer machines of the above-described type are disadvantageously incompatible with the production of cone-shaped confectionery products containing a product in the liquid or semi-liquid state. These confectionery products, immediately after they are made, contain a cream or a similar product which is still hot and thus in the liquid or semiliquid state, and cannot be laid horizontally on the conveyor belt due to the risk of the cream's exiting, which would cause irreparable damage to the sweet product as well as fouling the conveyor.

**Examples of prior art machines are given in the following documents.**

**Document** US 4942910 **discloses a process and apparatus for making a shaped frozen confection. The apparatus has a plurality of nozzles for extruding the shaped confection in a variety of contoured shapes. The nozzles simultaneously move in a vertical direction and circularly in a horizontal direction, thereby moving in a spiral path to produce a spirally-shaped frozen confection. A variety of differently shaped frozen confections can be made by varying the rate of extrusion from the nozzles, or the rate or direction of vertical movement of the nozzles.**

**Document** US 3070933 **discloses A machine for manufacturing confectionary products comprising a frame structure, a horizontal loading wheel rotatably carried by the frame structure, means for intermittently rotating said wheel, confectionary dispensing units carried on said frame structure in functional relation to said wheel, means for actuating said dispensers, said means including a shaft disposed through the center of the wheel, means for reciprocating the shaft, and means connecting the reciprocating shaft to the dispensers.**

**Document** US 3025983 **discloses a candy tray for reception of a plurality of cups filled with candy. The tray comprises a tray lower portion and a tray upper portion, said upper portion comprising a top wall and a peripheral flange depending from staid top wall and having an open bottom. The top wall has a plurality of holes sized and shaped for reception of said cups with each said cup extending slidably through a respective bore and resting upon a bottom wall. The distance between the upper surface of said top wall and said bottom wall is less than the height of said cups.**

A technical aim of the present invention is to provide a method and a machine for production of confectionery products which do not suffer from the above-described drawbacks.

An aim of the present invention, therefore, is to provide a method and a machine for production of confectionery products which enables a correct production of products having a conformation which is unsuitable for being laid stably on a horizontal transport plane, and more in particular a cone conformation.

A further aim of the invention is to provide a method and a machine for the production of confectionery products which enable a correct production of confectionery products containing a liquid or semiliquid product, in particular cream or the like.

These aims and other besides, as will emerge from the following description, are substantially attained by a method for the production of confectionery products having the characteristics expressed in claim 1 and/or in one or more of the claims depending thereon.

A further objective of the invention is a machine for the production of confectionery products of the present invention, having the characteristics expressed in claim 11 and/or in one or more of the claims depending thereon.

### Disclosure of Invention

Further characteristics and advantages of the device of the present invention will better emerge from the detailed description that follows, made by way of non-limiting reference to the accompanying figures of the drawings, in which:
figure 1 is a plan view of the machine for production of confectionery products of the present invention;
figure 2 is a perspective view of a first portion of the machine of figure 1;
figure 3 is a perspective view of a second portion of the machine of figure 1;
figure 4 is an enlarged view of a portion of the machine of figure 1;
figure 5 is a front view of a portion of the machine of figure 1, in a first operating stage;
figure 6 is a front view of the portion of machine of figure 5, in a second operating stage;
figure 7 is a front view of the portion of machine of figure 5, in a third operating stage;
figure 8 is a front view of the portion of machine of figure 5, in a fourth operating stage;
figure 9 is a perspective view of an outlet portion of the machine of figure 1;
figure 10 is a section view of a confectionery product obtained according to the method of the present invention.

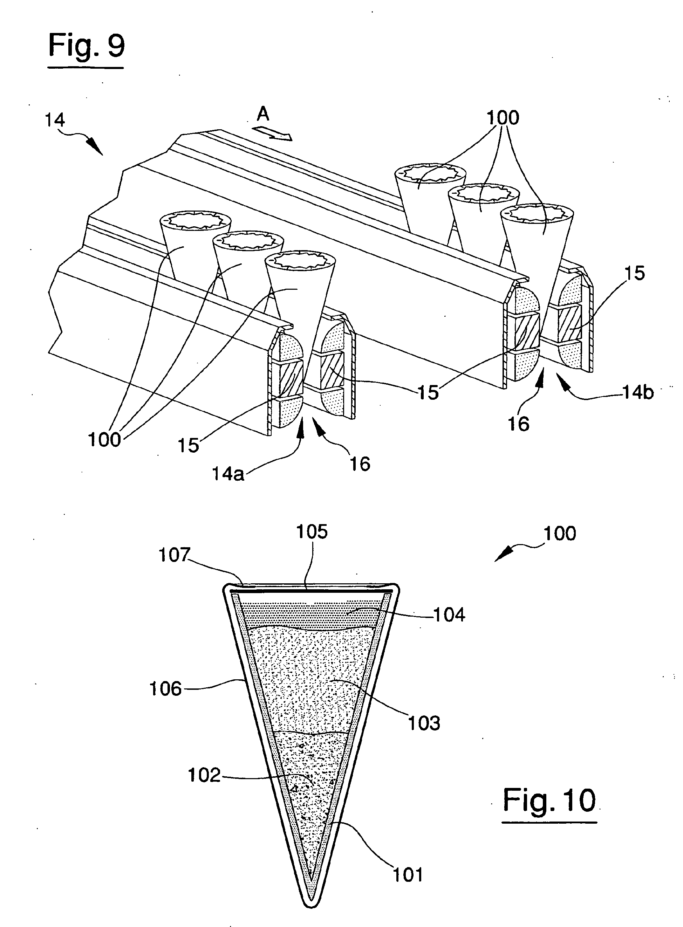

In figure 10, 100 denotes a confectionery product obtained using the method and the machine of the present invention.

The confectionery product 100, shown in a section view to include the contents thereof, comprises a conical wafer 101 which, in the illustrated embodiment of figure 9, is provided with an inlet mouth facing upwards and a point facing downwards.

Internally of the wafer 101 is a first layer of a first food product 102 on which a second layer of a second food product 103 is arranged. By way of example, the first food product is chocolate-based whereas the second is cream-based. Preferably, the two food products are in the liquid or semiliquid state, preferably having a creamy texture.

A coating layer is deposited on the upper surface of the second layer, preferably made of a granulated foodstuff, such as nuts.

The inlet mouth of the wafer 101 is closed by a circular lid 105. The wafer 101 is further externally covered with a covering 106 made of wrapping paper which superiorly exhibits an end flap 107 folded on the lid 105 to block the lid 105 stably on the wafer 101.

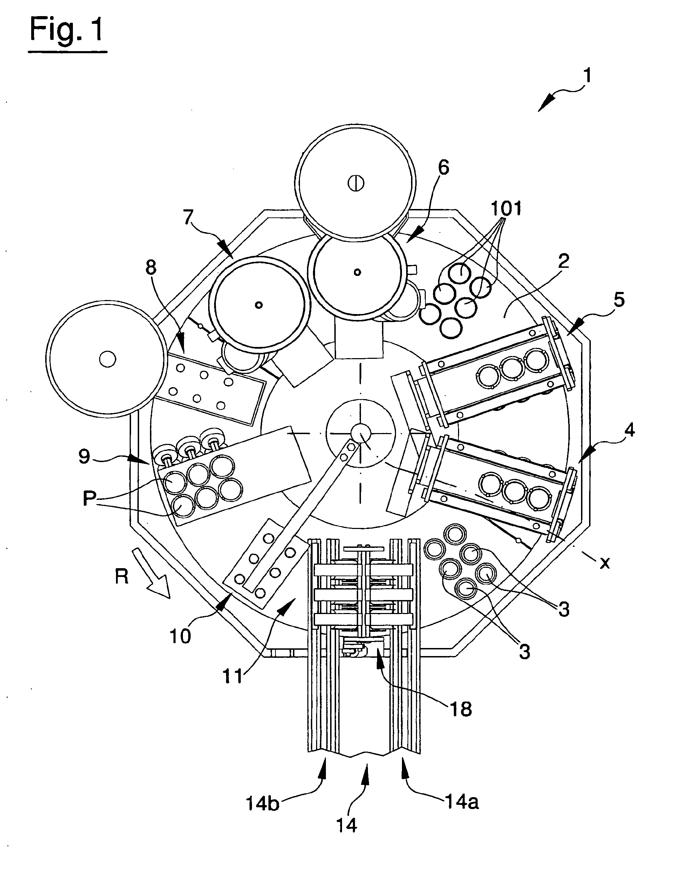

In the view of figure 1, 1 denotes in its entirety a machine for realising the confectionery product 100 of figure 9.

The machine 1 comprises a conveyor device, with might also have a straight development, but preferably comprises a carousel 2 which is rotatable about an axis X and which has a plurality of support seatings 3 for containing wafers 101 with the inlet mouth thereof facing upwards. The rotation axis X of the carousel 2 is vertical.

The support seatings 3 are arranged over a whole angular development of the carousel 2 about the rotation axis X and, in the illustrated embodiment, they are grouped in ten groups each constituted by six support seatings 3. The groups, which are angularly equidistanced about the rotation axis X, are each made up of two rows of three seatings 3, arranged side by side in a radial direction.

In an anticlockwise direction (rotation direction R), in the view of figure 1, the machine 1 comprises:
a pair of loading stations 4, 5 acting on side-by-side groups, each acting on a different row of three support seatings 3;
a first filling station 6 for pouring a batch of the first food product 102 into the wafers 101;
a second filling station 7 for pouring a batch of the second food product 103 into the wafers 101;
a third filling station 8 for pouring a batch of granulated foodstuff (covering layer 104) into the wafers 101;
a closing station 9 for application of the lid 105 on the filled wafer 101;
a folding station 10 for folding the above-mentioned upper flaps 107 of the covering 106 on the lid 105;
an outlet station 11 of the wafers 101 thus completed.

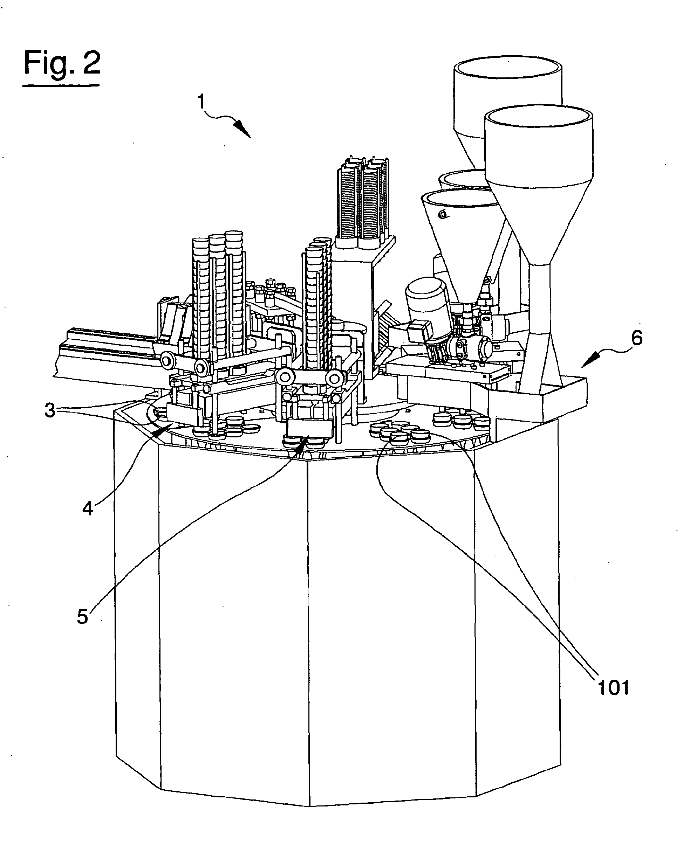

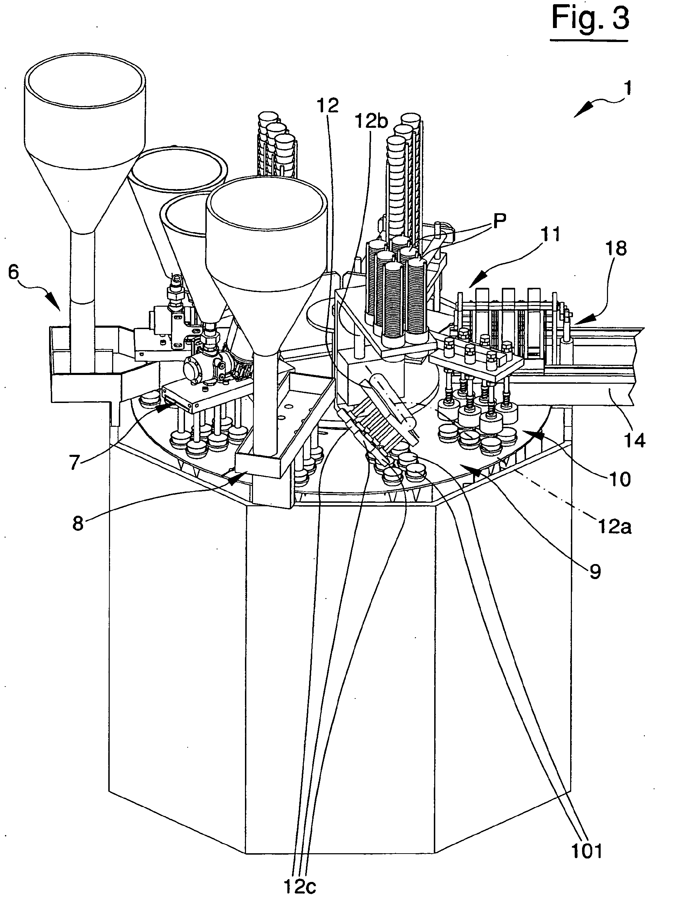

The carousel 2 is rotatable about the rotation axis X in order to bring the support seatings 3 through all the mentioned stations in the above-described order. The above-described stations are well visible in figures 2 and 3.

In embodiments of the invention which are not illustrated, the third filling station 8 might be omitted, or one of the first two filling stations 6, 7 could be omitted, or the third filling station 8 and one of the first two filling stations 6 7 could be omitted.

The loading stations 4, 5 supply wafers 101, preferably pre-wrapped in paper, i.e. having the covering 106 already externally applied.

The filling stations 6, 7, 8 pour a predetermined quantity of food product into the wafer 101 through the inlet mouth of the wafer 101. The filling of the wafer 101 might be partial or complete, according to the confectionery product 100 to be produced.

In the present invention, the first and the second food products 102, 103, are poured into the wafer 101 while in the liquid or semiliquid state, preferably in the creamy state. To realise this, the two food products might need to be heated and therefore to be at above ambient temperature, preferably comprised between 10°C and 60°C. In this case, given the rapidity of the functioning of the machine, the product remains in the liquid state up to when it reaches the outlet station 11, and even beyond.

The filling stations 6, 7, 8 are of a type comprising a hopper or upper tank, a plurality of dispensing nozzles (six, one for each underlying support seating 3) and an intermediate dispensing unit, where necessary powered by an electric motor.

The closing station 9 comprises a mobile support 12, rotatable about a horizontal axis 12a and vertically slidable on guides 12b. The mobile support 12 is provided with six units 12c each of which is positionable at one of the support seatings 3 in order to apply a lid 105 onto a wafer 101. The mobile support 12 assumes a removal configuration, in which it is arranged at the top of the guides 12b in order to enable the units 12c (facing upwards) to remove respective lids 105 from a same number of piles P of lids 105, and an application position in which it lowers and turns the units 12c downwards in order to apply the lids 105 on the underlying wafers 101.

The following folding station 10 comprises six pressers 13 which lower towards the underlying wafers 101 in order to fold the upper flaps 107 of the above-described covering 106 of the wafers 101.

A conveyor 14 is located at the outlet station 11, which is immediately downstream of the folding station 10, which conveyor 14 has the function of conveying the wafers 101 to successive work stations (not illustrated), for example packing or marking stations, or others beside.

In the illustrated embodiment, figure 9 clearly shows that the conveyor 14 comprises two parallel segments, 14a, 14b, each of which receives and conveys the wafers 101 coming from a respective row of three of each group of six wafers 101 arranged on the carousel 2. The conveyor 14, during the transport of the filled wafers 101, advantageously keeps the wafers 101 in a vertical orientation, i.e. with the inlet mouth facing upwards to prevent exit of the food products 102, 103. Though the wafers 101 are closed by the lids 105, the food products 102, 103 contained thereof are still in the liquid or semiliquid state and might drip through folds in the covering 106 should the wafers 101 be arranged horizontally or in any case in an incorrect position. A wrong positioning of the wafers 101 might also create undesired reciprocal mixing of the food products 102, 103 and the granulated foodstuff 104, causing a deterioration of the confectionery product 100 which would no longer be fit for sale.

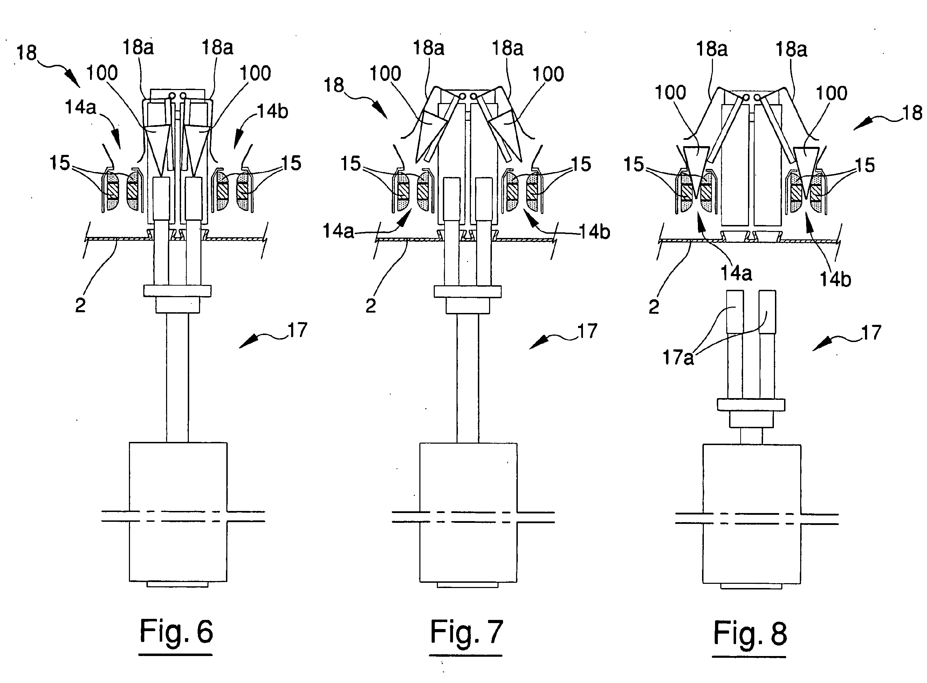

As shown in figures 8 and 9, each filled and packed wafer 101 is supported, while on the conveyor 14, at opposite sides thereof such as to be automatically orientated in a vertical direction under the action of its own weight. To this end, each segment 14a, 14b comprises two parallel bands 15 which face one another and are distanced in order to define a hollow space 16 in which the lower point of the conical wafer 101 inserts. The parallel bands 15 are mobile in an advancement direction A in order to convey the wafers 101 away from the carousel 2 while they support the wafers 101 thanks to the fact that the upper part of the wafers 101 has a transversal dimension which is greater than the hollow space 16 and thus rests on the parallel sides 15. The parallel bands are preferably defined by facing parallel branches of two conveyors having parallel belts.

The machine 1 further comprises means for transfer, arranged at the outlet station 11 and acting between the carousel 2 and the conveyor 14 to remove the wafers 101 from the carousel 2 and deposit them on the transporter 14. The means for transfer primarily comprise a pusher 17 which raises the filled and packed wafers 101 from the respective support seatings 3. The pusher 17 exhibits six terminals 17a each of which intercepts the lower portions of the wafers 101 and raised them up until they are disengaged from the support seatings 3. The terminals 17a are thus destined to cross the support seatings 3 in order to realise a total disengagement of the wafers 101 from the support seatings 3.

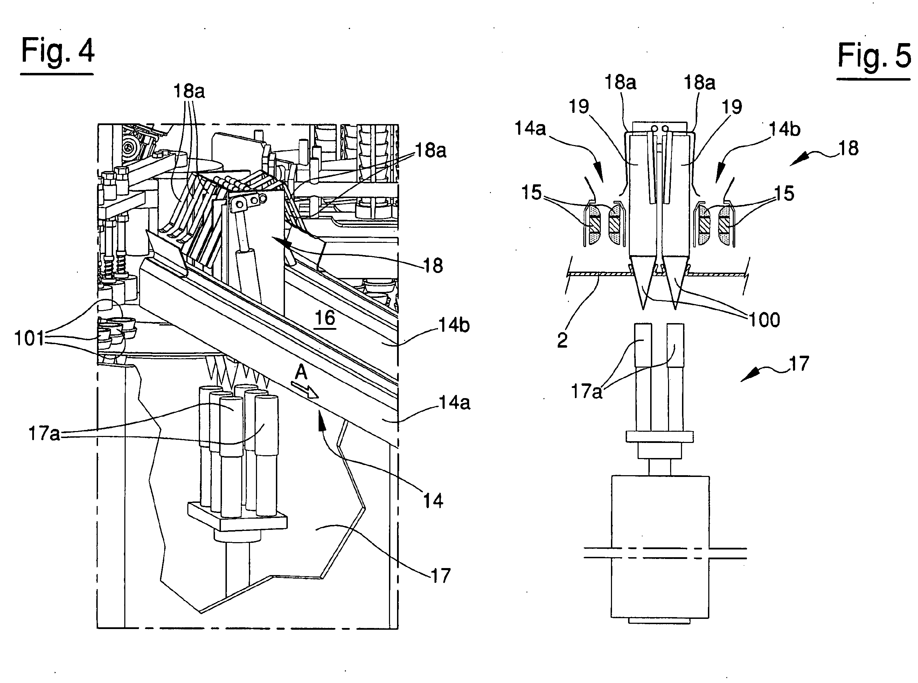

In greater detail, the pusher 17 is mobile between an inactive position (figures 4, 5, 8) in which it is in a lowered position and enables rotation of the carousel 2, and a working position (figures 6 and 7), in which it is in a raised position in order to disengage the wafers 101 from the respective support seatings 3.

The movement direction of the pusher 17 is substantially parallel to the rotation axis X of the carousel 2 and is therefore substantially vertical.

The means for transfer further comprise a tilter 18 which receives the wafers 101 raised by the pusher 17 and conveys them towards the conveyor 14. As shown in figures from 4 to 8, the tilter 18 comprises six C-shaped container elements 18a provided with an opening facing downwards in order each to receive a wafer 101. Each container element 18a exhibits a housing 19 in which a single wafer 101 can be housed.

In more detail, each container element 18a is rotatable about a preferably horizontal rotation axis between a receiving position (illustrated in figures 5 and 6), in which it faces an underlying wafer 101, and a release position in which it turns the lower opening towards the conveyor 14 to release the wafer 101 towards the conveyor 4.

In the receiving position, each container element 18a is arranged along a first direction, substantially parallel to the raising direction of the wafer 101, such that the pusher 17 pushes the wafer 101 into the housing 19 of the container element 18.

In the release position, the container element 18a is arranged in a second inclined direction with respect to the first direction, and in particular turning the lower opening towards the conveyor 14 in order to release the wafer 101 contained in the housing 19 by force of gravity onto the conveyor 14.

Activation of the pusher 17 and the tilter 18 is done by means of actuators (not illustrated), preferably hydraulic or pneumatic and possibly involving interposing of mechanical elements (not illustrated).

In embodiments of the invention which are not illustrated herein, the carousel 2 might exhibit a different number of support seatings 3, for example a single circumferential row of seatings for production of a single confectionery product 100 at each advancement of the carousel 2, or might exhibit groups of support seatings 3 having a different number of support seatings 3. In these further embodiments, the pusher 17 and the tilter 18 consequently assume different configurations, and the pusher 17 can comprise one or more terminals 17a, and the tilter 18 can exhibit one or more container elements 18a. Consequently a single segment 14a, 14b of the conveyor 14 can be included.

The present invention attains the set aims, overcoming the drawbacks inherent in the prior art.

The use of a conveyor enabling the wafers to be orientated vertically by force of gravity (as shown in figure 9) enables production of articles of confectionery containing liquid/semiliquid food products, or products which are entirely melted, which otherwise would be subject to deterioration or leakage of the food products. This is especially referred to cone-shaped confectionery products which are not naturally suited to assuming a vertical position when transported.

The above-described use of means for transfer further enables a rapid and efficient expulsion of the hot wafers from the support seatings of the carousel and the sending-on thereof to the conveyor, without the wafers significantly changing their orientation, thus again preventing deterioration or leakage of the confectionery products contained in the wafers.

## Claims

1. A method for production of confectionery products, wherein it comprises stages of:
predisposing a wafer (101) having an inlet mouth for a food product (102, 103) to be inserted in the wafer (101), the wafer (101) being orientated in such a way as to have the inlet mouth thereof facing in an upwards direction;
at least partially filling the wafer (101) through the inlet mouth with a liquid or semiliquid food product (102, 103);
packing the filled wafer (101), realising at least a closure of the inlet mouth;
conveying the filled and packed wafer (101) to a following work station while the wafer (101) is maintained in a substantially vertical orientation which prevents exit of the liquid or semi-liquid food product (102, 103) from the wafer (101);
**the stage of conveying being realised contemporaneously to a stage of supporting the wafer (101) on two opposite sides thereof, such that the wafer (101) is kept in the substantially vertical orientation by action of an own weight thereof.**

2. The method of claim 1, wherein the stage of predisposing the wafer (101) comprises a stage of predisposing a wafer (101) having a conical shape.

3. The method of claim 1 or 2, **characterised in that** the stage of predisposing the wafer (101) is realised by arranging the wafer (101) on a conveyor device (2) having a plurality of support seatings (3) for respective wafers (101), the method further comprising successive stages of activating the conveyor device (2) in order to bring the wafer (101) to at least a filling station (6, 7, 8) and an outlet station (11).

4. The method of one or more of the preceding claims, wherein the stage of predisposing the wafer (101) comprises a stage of pre-wrapping the wafer (101) with an external wrapping (106) made of a wrapping paper.

5. The method of one or more of the preceding claims, wherein it comprises, between the stage of packing the wafer (101) and the stage of conveying the wafer (101), a stage of removing the wafer (101) from a carousel (2); the stage of removing comprising:
a first stage of distancing the wafer (101) from the respective support seating (3) along a first direction which is substantially parallel to the rotation axis (X) of the carousel (2), and
a successive second stage of nearing the wafer (101) to a conveyor (14) destined to perform the conveying stage.

6. The method of claim 5, wherein the first stage is realised by raising the wafer (101) with respect to the support seating (3) and wherein the second stage of nearing is realised by arranging the wafer (101) in a second inclined direction with respect to the first direction and allowing the wafer (101) to slide by force of gravity along the inclined direction towards a different zone from the support seating (3) in which the wafer (101) was previously housed.

7. The method of one or more of the preceding claims, wherein the stage of conveying is realised when the food product (102, 103) contained in the wafer is in a liquid/semiliquid state.

8. The method of one or more of the preceding claims, wherein the stage of conveying is realised when the food product (102, 103) contained in the wafer is in a melted state and exhibits a temperature which is above an ambient temperature, preferably comprised between 10°C and 60°C.

9. The method of claim 4, wherein the stage of closing the inlet mouth comprises a stage of applying a lid (105) to the inlet mouth and a stage of folding a flap (107) of the external covering (106) on the lid (105) in order to block the lid (105) in a stable position.

10. The method of any one of the preceding claims, wherein the stage of predisposing the wafer (101) is realised by arranging the wafer (101) on a rotatable carousel (2) having a plurality of support seatings (3) for respective wafers (101), the method further comprising successive stages of rotating the carousel (2) about the axis (X) in order to bring the wafer (101) to at least a filling station (6, 7, 8) and an outlet station.

11. A machine for producing confectionery articles, preferably for realising the method of one of more of the preceding claims, comprising:
a conveyor device having a plurality of support seatings (3) for wafers (101) distributed in a predetermined way;
at least a loading station (4, 5) of the wafers (101), a filling station (6, 7, 8) of the wafers (101) with a liquid or semiliquid food product (102, 103), and an outlet station (11) for the wafers (101);
at least a conveyor (14) for receiving the wafers (101) coming from the outlet station (11) and for conveying the wafers (101) to a successive work station while the wafers (101) are kept in a substantially vertical orientation suitable
for preventing an exit of the food product (102, 103) contained in the wafer (101);
means for transferring (17, 18) arranged at the outlet station (11) and acting on the wafers (101) present on a carousel (2) in order to transfer the wafers (101) from the carousel (2) to the conveyor (14).

12. The machine of claim 11, wherein the means for transferring (17, 18) comprise a pusher (17), acting on at least a wafer (101) present on the carousel (2) for distancing the wafer (101) from the respective support seating (3) along a first direction, and a tilter (18) acting on the wafer (101) which is distanced from the support seating (3) for conveying the wafer (101) along a second direction, inclined with respect to the first direction, and transferring the wafer (101) onto the conveyor (14).

13. The machine of claim 12, wherein the pusher (17) is mobile between an inactive position, in which it is in a lowered position, and a working position, in which it is in a raised position and intercepts a lower portion of a wafer (101), disengaging the wafer (101) from the respective support seating (3).

14. The machine of claim 12 or 13, wherein the tilter (18) comprises at least a container element (18a) having a housing (19) in which a wafer (101) can be housed, the container element (18a) being rotatable between a receiving position, in which it is arranged along the first direction to receive a wafer (101) which has been distanced from the respective support seating (3) by action of the pusher, and a release position, in which it is arranged along the second direction in order to release the wafer (101) by force of gravity towards the conveyor (14).

15. The machine of claim 14, wherein the container element (18a) is C-shaped and exhibits a receiving opening which faces downwards and faces towards a support seating (3) of the carousel (2) when the container element (18a) is in the receiving position.

16. The machine of one or more of claims from 11 to 15, wherein the conveyor (14) exhibits at least a segment (14a, 14b) which comprises two bands (15) which are mobile and parallel in an advancement direction (A) and which define between them a hollow space (16) in which a lower part of the wafer (101) is arranged during transport, the parallel sides (25) supporting an upper part of the wafer (101) on opposite sides thereof during transport of the wafer (101).

17. The machine of claim 16, wherein the two parallel sides (15) are defined by facing branches of a pair of parallel-belt conveyors.

18. The machine of any one of claims from 11 to 17, wherein the conveyor device comprises a carousel (2) which is rotatable about a rotation axis (X) and which has a plurality of support seatings (3) for wafers (101) which support seatings (3) are angularly distributed about the rotation axis (X).

## Patentansprüche

1. Verfahren für die Herstellung von Konfektwaren, wobei es folgende Phasen umfasst:
Vorbereiten einer Waffel (101), aufweisend eine Einlassmündung für ein Nahrungsmittelprodukt (102, 103), einzufüllen in die Waffel (101), wobei die Waffel (101) so ausgerichtet wird, dass ihre Einlassmündung nach oben zeigt; zumindest teilweises Füllen der Waffel (101) durch die Einlassmündung mit einem flüssigen oder halbflüssigen Nahrungsmittelprodukt (102, 103);
Verpacken der gefüllten Waffel (101), wobei mindestens ein Verschluss der Einlassmündung realisiert wird; Förderung der gefüllten und
verpackten Waffel (101) zu einer nächsten Bearbeitungsstation, während die Waffel (101) in einer im Wesentlichen vertikalen Ausrichtung beibehalten wird, die verhindert, dass das flüssige oder halbflüssige Nahrungsmittelprodukt (102, 103) aus der Waffel (101) austritt;
die Phase der Förderung erfolgt gleichzeitig mit einer Phase der Abstützung der Waffel (101) an zwei ihrer entgegengesetzten Seiten, sodass die Waffel (101) im Wesentlichen in vertikaler Ausrichtung beibehalten wird, und zwar durch die Wirkung ihres eigenen Gewichts.

2. Verfahren nach Anspruch 1, wobei die Phase des Vorbereitens der Waffel (101) eine Phase des Vorbereitens einer Waffel (101) mit Kegelform umfasst.

3. Verfahren nach Anspruch 1 oder 2, **dadurch gekennzeichnet, dass** die Phase des Vorbereitens der Waffel (101) durchgeführt wird, indem die Waffel (101) auf einer Fördervorrichtung (2), aufweisend mehrere Halterungssitze (3) für jeweilige Waffeln (101), durchgeführt wird, wobei das Verfahren zudem nachfolgende Phasen des Aktivierens der Fördervorrichtung (2) umfasst, um die Waffel (101) zumindest zu einer Füllstation (6, 7, 8) und zu einer Ausgabestation (11) zu bringen.

4. Verfahren nach einem oder mehreren der vorhergehenden Ansprüche, wobei die Phase des Vorbereitens der Waffel (101) eine Phase des vorbereitenden Einwickelns der Waffel (101) mit einer äußeren Umverpackung (106), bestehend aus einem Einwickelpapier, umfasst.

5. Verfahren nach einem oder mehreren der vorhergehenden Ansprüche, wobei es zwischen der Phase des Verpackens der Waffel (101) und der Phase des Förderns der Waffel (101) eine Phase des Entfernens der Waffel (101) von einem Karussell (2) umfasst; die Phase des Entfernens umfassend:
eine erste Phase des Beabstandens der Waffel (101) vom jeweiligen Halterungssitz (3) entlang einer ersten Richtung, die im Wesentlichen parallel zur Rotationsachse (X) des Karussells (2) verläuft, und
eine nachfolgende zweite Phase des Annäherns der Waffel (101) an einen Förderer (14), der dazu bestimmt ist, die Förderungsphase auszuführen.

6. Verfahren nach Anspruch 5, wobei die erste Phase durchgeführt wird, indem die Waffel (101) im Vergleich zum Halterungssitz (3) angehoben wird, und wobei die zweite Phase des Annäherns durchgeführt wird, indem die Waffel (101) in einer zweiten geneigten Richtung im Vergleich zur ersten Richtung angeordnet wird und der Waffel (101) ermöglicht wird, durch Schwerkraft entlang der geneigten Richtung aus dem Halterungssitz (3), in dem die Waffel (101) zuvor untergebracht war, zu einem anderen Bereich zu gleiten.

7. Verfahren nach einem oder mehreren der vorhergehenden Ansprüche, wobei die Phase des Förderns durchgeführt wird, wenn sich das in der Waffel enthaltene Nahrungsmittelprodukt (102, 103) in einem flüssigen/halbflüssigen Zustand befindet.

8. Verfahren nach einem oder mehreren der vorhergehenden Ansprüche, wobei die Phase des Förderns durchgeführt wird, wenn sich das in der Waffel enthaltene Nahrungsmittelprodukt (102, 103) in einem geschmolzenen Zustand befindet und eine Temperatur aufweist, die über einer Umgebungstemperatur liegt, vorzugsweise zwischen 10 und 60 °C.

9. Verfahren nach Anspruch 4, wobei die Phase des Verschließens der Einlassmündung eine Phase des Anbringens eines Deckels (105) an der Einlassmündung sowie eine Phase des Faltens einer Klappe (107) der äußeren Abdeckung (106) auf dem Deckel (105) umfasst, um den Deckel (105) in einer stabilen Position zu blockieren.

10. Verfahren nach einem der vorhergehenden Ansprüche, wobei die Phase des Vorbereitens der Waffel (101) durchgeführt wird, indem die Waffel (101) auf einem Drehkarussell (2), aufweisend mehrere Halterungssitze (3) für jeweilige Waffeln (101), angeordnet wird, wobei das Verfahren zudem nachfolgende Phasen des Drehens des Karussells (2) um die Achse (X) umfasst, um die Waffel (101) zumindest zu einer Füllstation (6, 7, 8) und zu einer Ausgabestation zu bringen.

11. Gerät zur Herstellung von Konfektwaren, vorzugsweise zur Durchführung des Verfahrens nach einem oder mehreren der vorhergehenden Ansprüche, umfassend:
eine Fördervorrichtung, aufweisend mehrere Halterungssitze (3) für Waffeln (101), verteilt auf eine vorgegebene Weise;
mindestens eine Ladestation (4, 5) der Waffeln (101), eine Füllstation (6, 7, 8) zur Befüllung der Waffeln (101) mit einem flüssigen oder halbflüssigen Nahrungsmittelprodukt (102, 103) und eine Ausgabestation (11) für die Waffeln (101);
mindestens einen Förderer (14) zur Aufnahme der von der Ausgabestation (11) eingehenden Waffeln (11) und zur Beförderung der Waffeln (101) zu einer nachfolgenden Bearbeitungsstation, während die Waffeln (101) in einer im Wesentlichen vertikalen Ausrichtung beibehalten werden, die geeignet ist, um das Auslaufen des in der Waffel (101) enthaltenen Nahrungsmittelprodukts (102, 103) zu verhindern;
Übergabemittel (17, 18), angeordnet an der Ausgabestation (11) und wirkend auf die Waffeln (101), befindlich auf einem Karussell (2), um die Waffeln (101) vom Karussell (2) zum Förderer (14) weiterzuleiten.

12. Gerät nach Anspruch 11, wobei die Übergabemittel (17, 18) einen Schieber (17) umfassen, wirkend auf mindestens eine Waffel (101), befindlich auf dem Karussell (2), um die Waffel (101) vom jeweiligen Halterungssitz (3) entlang einer ersten Richtung zu beabstanden, und eine Kippvorrichtung (18), wirkend auf die Waffel (101), die vom Halterungssitz (3) beabstandet ist, um die Waffel (101) entlang einer zweiten Richtung, geneigt im Vergleich zur ersten Richtung, zu fördern und die Waffel (101) zum Förderer (14) weiterzuleiten.

13. Gerät nach Anspruch 12, wobei der Schieber (17) zwischen einer inaktiven Stellung, in der er sich in einer abgesenkten Position befindet, und einer Arbeitsstellung, in der er sich in einer angehobenen Position befindet, beweglich ist und einen unteren Abschnitt einer Waffel (101) greift und die Waffel (101) vom jeweiligen Halterungssitz (3) löst.

14. Gerät nach Anspruch 12 oder 13, wobei die Kippvorrichtung (18) mindestens ein Behälterelement (18a) umfasst, aufweisend ein Gehäuse (19), in dem eine Waffel (101) untergebracht werden kann, wobei das Behälterelement (18a) zwischen einer Aufnahmestellung, in der es entlang der ersten Richtung angeordnet ist, um eine Waffel (101), die vom jeweiligen Halterungssitz (3) durch die Wirkung des Schiebers beabstandet wurde, aufzunehmen, und einer Freigabestellung, in der es entlang der zweiten Richtung angeordnet ist, um die Waffel (101) durch Schwerkraft zum Förderer (14) freizugeben.

15. Gerät nach Anspruch 14, **dadurch gekennzeichnet, dass** das Behälterelement (18a) C-förmig ist und eine Aufnahmeöffnung aufweist, die nach unten und zu einem Halterungssitz (3) des Karussells (2) zeigt, wenn sich das Behälterelement (18a) in der Aufnahmestellung befindet.

16. Gerät nach einem oder mehreren der Ansprüche 11 bis 15, wobei der Förderer (14) mindestens ein Segment (14a, 14b) aufweist, das zwei Bänder (15) umfasst, die beweglich sind und parallel in einer Vorschubrichtung (A) angeordnet sind und die zwischen ihnen einen Hohlraum (16) definieren, in dem ein unterer Teil der Waffel (101) während des Transports angeordnet sind, wobei die parallelen Seiten (25) einen oberen Teil der Waffel (101) an deren entgegengesetzten Seiten während des Transports der Waffel (101) tragen.

17. Gerät nach Anspruch 16, wobei die zwei parallelen Seiten (15) durch gegenüberliegend angeordnete Abschnitte eines Paars paralleler Bandförderer definiert sind.

18. Gerät nach einem der Ansprüche 11 bis 17, wobei die Fördervorrichtung ein Karussell (2) umfasst, das um eine Rotationsachse (X) drehbar ist und eine Mehrzahl an Halterungssitzen (3) für Waffeln (101) aufweist, wobei die Halterungssitze (3) winkelförmig um die Rotationsachse (X) verteilt sind.

## Revendications

1. Procédé pour produire des produits de confiserie, comprenant les étapes suivantes :
la prédisposition d'une gaufrette (101) possédant une bouche d'entrée permettant à un produit alimentaire (102, 103) d'être introduit dans la gaufrette (101), la gaufrette (101) étant orientée de telle sorte à ce que la bouche d'entrée de celle-ci soit orientée vers le haut ; et au moins le remplissage partiel de la gaufrette (101) par la bouche d'entrée avec un produit alimentaire liquide ou semi-liquide (102, 103) ;
le conditionnement de la gaufrette remplie (101), en réalisant au moins une fermeture de la bouche d'entrée ; le transport de la gaufrette remplie et conditionnée (101) vers le poste de travail suivant, pendant que la gaufrette (101) est maintenue dans une orientation substantiellement verticale empêchant au produit alimentaire liquide ou semi-liquide de sortir (102, 103) de la gaufrette (101) ;
l'étape de transport étant réalisée en même temps que celle de maintien de la gaufrette (101) sur deux côtés opposés de celle-ci, de sorte que la gaufrette (101) est maintenue dans une orientation substantiellement verticale par l'action de son propre poids.

2. Procédé selon la revendication 1, dans lequel l'étape de prédisposition de la gaufrette (101) comprend une étape de prédisposition d'une gaufrette (101) ayant une forme conique.

3. Procédé selon la revendication 1 ou 2, **caractérisé en ce que** l'étape de prédisposition de la gaufrette (101) est réalisée en positionnant la gaufrette (101) sur un dispositif transporteur (2) ayant une pluralité d'emplacements de support (3) pour les gaufrettes correspondantes (101), le procédé comprenant de plus les étapes successives d'activation du dispositif transporteur (2) permettant d'amener la gaufrette (101) à au moins un poste de remplissage (6, 7, 8) et à un poste de sortie (11).

4. Procédé selon l'une ou plusieurs des revendications précédentes, dans lequel l'étape de prédisposition de la gaufrette (101) comprend une étape de préemballage de la gaufrette (101) avec un emballage externe (106) fait en papier d'emballage.

5. Procédé selon l'une ou plusieurs des revendications précédentes, comprenant, entre l'étape de conditionnement de la gaufrette (101) et celle de transport de la gaufrette (101), une étape de retrait de la gaufrette (101) d'un carrousel (2) ; l'étape de retrait comprenant :
une première étape consistant à éloigner la gaufrette (101) de l'emplacement de support respectif (3) le long d'une première direction étant substantiellement parallèle à l'axe de rotation (X) du carrousel (2), et
une deuxième étape successive consistant à rapprocher la gaufrette (101) d'un transporteur (14) destiné à réaliser l'étape de transport.

6. Procédé selon la revendication 5, dans lequel la première étape est réalisée en relevant la gaufrette (101) par rapport à l'emplacement de support (3) et dans lequel la seconde étape de rapprochement est réalisée en positionnant la gaufrette (101) dans une seconde direction inclinée par rapport à la première direction et permettant à la gaufrette (101) de glisser par la force de la gravité le long de la direction inclinée vers une zone différente de celle de l'emplacement de support (3) dans lequel la gaufrette (101) était initialement logée.

7. Procédé selon l'une ou plusieurs des revendications précédentes, dans lequel l'étape de transport est réalisée lorsque le produit alimentaire (102, 103) contenu dans la gaufrette est dans un état liquide/semi-liquide.

8. Procédé selon l'une ou plusieurs des revendications précédentes, dans lequel l'étape de transport est réalisée lorsque le produit alimentaire (102, 103) contenu dans la gaufrette est dans un état fondu et possède une température située au-dessus de la température ambiante, de préférence comprise entre 10°C et 60°C.

9. Procédé selon la revendication 4, dans lequel l'étape de fermeture de la bouche d'entrée comprend une étape d'application d'un couvercle (105) à la bouche d'entrée et une étape de pliage d'un rabat (107) de la couverture externe (106) sur le couvercle (105) afin de bloquer le couvercle (105) dans une position stable.

10. Procédé selon l'une quelconque des revendications précédentes, dans lequel l'étape de prédisposition de la gaufrette (101) est réalisée en positionnant la gaufrette (101) sur un carrousel rotatif (2) ayant une pluralité d'emplacements de support (3) pour les gaufrettes correspondantes (101), le procédé comprenant de plus les étapes successives de rotation du carrousel (2) autour d'un axe (X) afin d'amener la gaufrette (101) à au moins un poste de remplissage (6, 7, 8) et à un poste de sortie.

11. Machine pour produire des articles de confiserie, de préférence pour réaliser le procédé selon l'une ou plusieurs des revendications précédentes, comprenant :
un dispositif transporteur possédant une pluralité d'emplacements de support (3) pour gaufrettes (101) distribués d'une façon préétablie ;
au moins un poste de chargement (4, 5) des gaufrettes (101), un poste de remplissage (6, 7, 8) des gaufrettes (101) avec un produit alimentaire liquide ou semi-liquide (102, 103), et un poste de sortie (11) pour les gaufrettes (101) ;
au moins un transporteur (14) pour recevoir les gaufrettes (101) venant du poste de sortie (11) et
pour transporter les gaufrettes (101) à un poste de travail successif pendant que les gaufrettes (101) sont maintenues dans une orientation substantiellement verticale permettant d'empêcher la sortie du produit alimentaire (102, 103) contenu dans la gaufrette (101) ;
des moyens de transfert (17, 18) disposés au niveau du poste de sortie (11) et agissant sur les gaufrettes (101) présentes sur un carrousel (2) afin de transférer les gaufrettes (101) du carrousel (2) vers le transporteur (14).

12. Machine selon la revendication 11, dans laquelle les moyens de transfert (17, 18) comprennent un poussoir (17), agissant sur au moins une gaufrette (101) présente sur le carrousel (2) pour éloigner la gaufrette (101) de l'emplacement de support (3) respectif le long d'une première direction, et un culbuteur (18) agissant sur la gaufrette (101) étant éloigné de l'emplacement de support (3) afin de transporter la gaufrette (101) le long d'une seconde direction, inclinée par rapport à la première direction, et de transférer la gaufrette (101) sur le transporteur (14).

13. Machine selon la revendication 12, dans laquelle le poussoir (17) est mobile entre une position inactive, dans laquelle il se trouve dans une position abaissée, et une position de travail, dans laquelle il se trouve dans une position relevée et intercepte la partie inférieure d'une gaufrette (101), désengageant la gaufrette (101) de l'emplacement de support respectif (3).

14. Machine selon les revendications 12 ou 13, dans laquelle le culbuteur (18) comprend au moins un élément conteneur (18a) possédant un logement (19) dans lequel une gaufrette (101) peut être logée, l'élément conteneur (18a) pouvant tourner entre une position de réception, dans laquelle il est disposé le long de la première direction pour recevoir une gaufrette (101) qui a été éloignée de l'emplacement de support respectif (3) par l'action du poussoir, et une position de dégagement, dans laquelle il est disposé le long de la seconde direction afin de dégager la gaufrette (101) par la force de la gravité vers le transporteur (14).

15. Machine selon la revendication 14, dans laquelle l'élément conteneur (18a) est en forme de C et présente une ouverture de réception tournée vers le bas et vers un emplacement de support (3) du carrousel (2) lorsque l'élément conteneur (18a) se trouve dans la position de réception.

16. Machine selon l'une ou plusieurs des revendications de 11 à 15, dans laquelle le transporteur (14) présente au moins un segment (14a, 14b) comprenant deux bandes (15) qui sont mobiles et parallèles dans un sens de progression (A) et qui définissent entre elles un espace creux (16) dans lequel une partie inférieure de la gaufrette (101) se place lors du transport, les côtés parallèles (25) supportant une partie supérieure de la gaufrette (101) sur les côtés opposés de celle-ci lors du transport de la gaufrette (101).

17. Machine selon la revendication 16, dans laquelle les deux côtés parallèles (15) sont définis par des branches, se faisant face, d'une paire de tapis transporteur parallèles.

18. Machine selon l'une quelconque des revendications de 11 à 17, dans laquelle le dispositif transporteur comprend un carrousel (2) pouvant tourner autour d'un axe de rotation (X) et possédant une pluralité d'emplacements de support (3) pour les gaufrettes (101) lesdits emplacements de support (3) étant angulairement distribués autour de l'axe de rotation (X).
